# EUROPEAN PATENT SPECIFICATION

(11) **EP 3 889 815 B1**
(45) Date of publication and mention of the grant of the patent: **29.05.2024**
(21) Application number: 21165341.5
(22) Date of filing: 26.03.2021
(51) Int. Cl.: G06F 21/62, H04L 9/40

(54) **SYSTEM AND METHOD FOR CONTROLLING OPERATION OF A COMPUTING DEVICE**
SYSTEM UND VERFAHREN ZUR STEUERUNG DES BETRIEBS EINER RECHNERVORRICHTUNG
SYSTÈME ET PROCÉDÉ POUR COMMANDER LE FONCTIONNEMENT D'UN DISPOSITIF INFORMATIQUE

(30) Priority: 03.04.2020 EP 20168062
(43) Date of publication of application: 06.10.2021
(73) Proprietor: Argus Cyber Security Ltd, 6789155 Tel Aviv (IL)
(72) Inventor: Roth, Gilad, 90411 Nürnberg (DE)
(74) Representative: Continental Corporation

(56) References cited:
- US-A1- 2018 152 477
- US-A1- 2019 207 976

## Description

### FIELD OF THE INVENTION

The present invention relates generally to controlling operation of a computing device. More specifically, the present invention relates to logging, reporting and/or preventing an attempt to access or use a resource in a computing device.

### BACKGROUND OF THE INVENTION

Various systems and methods for protecting resources in a computing device are known. However, such known systems and methods typically include, or require, substantial resources and are therefore unsuitable for computing devices in which limited resources are available.

US 2019/207976 A1 relates to a system for gathering network intrusion counterintelligence. A system can maintain a decoy network environment at one or more machines. The system can identify a malicious user accessing network services through the network environment. Further, the system can receive network service access requests from the user at one or more machines in the network environment and subsequently direct the network service access requests from the malicious user to the decoy network environment based on an identification of the malicious user. The network services access requests can be satisfied with network service access responses generated in the decoy network environment. Subsequently, the system can maintain malicious user analytics based on the network service access requests of the malicious user that are directed to the decoy network environment.

US 2018/152477 A1 relates to a security system which is provided with a packet reception means that receives a request from an intruding device that is attempting intrusion; a dummy resource characteristic information storage means that stores characteristic information for a plurality of virtual dummy resources; a dummy resource operation management means that manages whether or not to operate the dummy resources on the basis of the characteristic information; a dummy resource management means that determines whether or not the dummy resources which are virtually operated by the operation management means should respond that said resources are present; a dummy response generation means that, for each dummy resource that the dummy resource management means has determined should respond, generates a dummy response on the basis of the characteristic information in response to the request directed to the dummy resource; and a dummy response transmission means that transmits the dummy response to the intruding device.

### SUMMARY OF THE INVENTION

A system and method for controlling operation of a computing device may include associating a resource with a special handler included in a list of handlers; receiving, by the special handler and from an operating system controlling operation of the computing device, a request to access the resource on behalf of a source; selecting, by the special handler, whether or not to allow the source to access the resource, and: if selecting to allow access to the resource then causing, by the special handler, the operating system to determine that the special handler has failed to access the resource to thus cause the operating system to invoke a second handler in the list of handlers and enabling, by the second handler, access to the resource; and if selecting to prevent access to the resource then performing at least one of: providing access to a dummy resource, preventing access to the resource and informing the operating system that the resource was successfully accessed, logging an attempt to access the resource, and reporting an attempt to access the resource.

If a request to access a resource is refused by the special handler then the operating system requests a second handler to access the resource; and the second handler may enable access to the resource. A resource may be one of: a folder, a file, a port, a memory, a controller, a service, a component and an operating system resource or service. Providing access to a dummy resource may include imitating the resource.

Selecting whether or not to allow access to a resource may be based on at least one of: the source, a resource of a request to access the resource, a requested operation, a signature associated with the resource and a context. A requested operation may be one of: read, write, execute, delete, copy, modify and login. An embodiment may selectively log a request to access a resource. Preventing access to a resource may include returning an error to a source of a request to access the resource. A manager or handler of a resource may be wrapped by a proxy or wrapper.

Other aspects and/or advantages of the present invention are described herein.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with a same label in all the figures in which they appear. A label labeling an icon representing a given feature of an embodiment of the disclosure in a figure may be used to reference the given feature. Dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of a computing device according to illustrative embodiments of the present invention;
Fig. 2 shows a system according to illustrative embodiments of the present invention;
Fig. 3A shows data constructs and a flow according to illustrative embodiments of the present invention;
Fig. 3B shows data constructs according to illustrative embodiments of the present invention; and
Fig. 4 shows a flow according to illustrative embodiments of the present invention.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

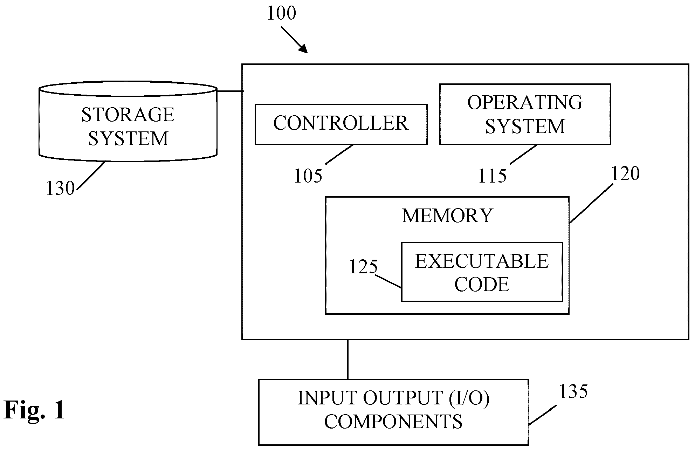

Reference is made to Fig. 1, showing a non-limiting, block diagram of a computing device or system 100 that may be used by, or included in, a system according to some embodiments of the present invention. For example, computing device may be an electronic control unit (ECU) installed in a vehicle, e.g., an ECU 250 as further described herein.

Computing device (or system) 100 may include a controller 105 that may a hardware controller. For example, computer hardware processor or hardware controller 105 may be, or may include, a central processing unit processor (CPU), a chip or any suitable computing or computational device. Computing system 100 may include a memory 120, an operating system (OS) 115, executable code 125, a storage system 130 and input/output (I/O) components 135. Controller 105 (or one or more controllers or processors, possibly across multiple units or devices) may be configured (e.g., by executing software or code) to carry out methods described herein, and/or to execute or act as the various modules, units, etc., for example by executing software or by using dedicated circuitry. More than one computing devices 100 may be included in, and one or more computing devices 100 may be, or act as the components of, a system according to some embodiments of the invention.

OS 115 may be or may include any code segment (e.g., one similar to executable code 125 described herein) designed and/or configured to perform tasks involving coordination, scheduling, arbitration, supervising, controlling or otherwise managing operation of computing device 100, for example, scheduling execution of software programs or enabling software programs or other modules or units to communicate. OS 115 may be a commercial operating system, e.g., QNX or Linux.

Memory 120 may be a hardware memory. For example, memory 120 may be, or may include machine-readable media for storing software e.g., a Random-Access Memory (RAM), a read only memory (ROM), a memory chip, a flash memory (referred to herein as flash), a volatile and/or non-volatile memory or other suitable memory units or storage units. Memory 120 may be or may include a plurality of, possibly different memory units. Memory 120 may be a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 may be software, an application, a program, a process, task or script. A program, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein.

Executable code 125 may be executed by controller 105 possibly under control of an operating system. For example, executable code 125 may be an application, e.g., in an ECU, that protects resources in, or of, the ECU as further described herein. Although, for the sake of clarity, a single item of executable code 125 is shown in Fig. 1, a system according to some embodiments of the invention may include a plurality of executable code segments similar to executable code 125 that may be loaded into memory 120 and cause controller 105 to carry out methods described herein. For example, units or modules, e.g., resource managers described herein, may be, or may include, controller 105, memory 120 and executable code 125.

Storage system 130 may be or may include, for example, a hard disk drive, a universal serial bus (USB) device, a flash memory or unit or any other suitable removable and/or fixed storage unit. In some embodiments, some of the components shown in Fig. 1 may be omitted. For example, storage system 130 may be a non-volatile memory (e.g., a flash memory) included in memory 120 of an ECU. Accordingly, although shown as a separate component, storage system 130 may be embedded or included in system 100, e.g., in memory 120.

I/O components 135 may be, may be used for connecting (e.g., via included ports) or they may include: a mouse; a keyboard; a touch screen or pad or any suitable input device. I/O components may include one or more screens, touchscreens, displays or monitors, speakers and/or any other suitable output devices. Any applicable I/O components may be connected to computing device 100 as shown by I/O components 135, for example, a wired or wireless network interface card (NIC), a universal serial bus (USB) device or an external hard drive may be included in I/O components 135.

A system according to some embodiments of the invention may include components such as, but not limited to, a plurality of central processing units (CPU) or any other suitable multi-purpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units (e.g., memory 120 may include a flash memory and a RAM), and a plurality of storage units. A system may additionally include other suitable hardware components and/or software components. In some embodiments, a system may include or may be, for example, a server computer, a network device and any number of devices, e.g., internet of things (IoT) devices, ECUs in a vehicle, e.g., ECUs included in a car, a train, a boat or an airplane.

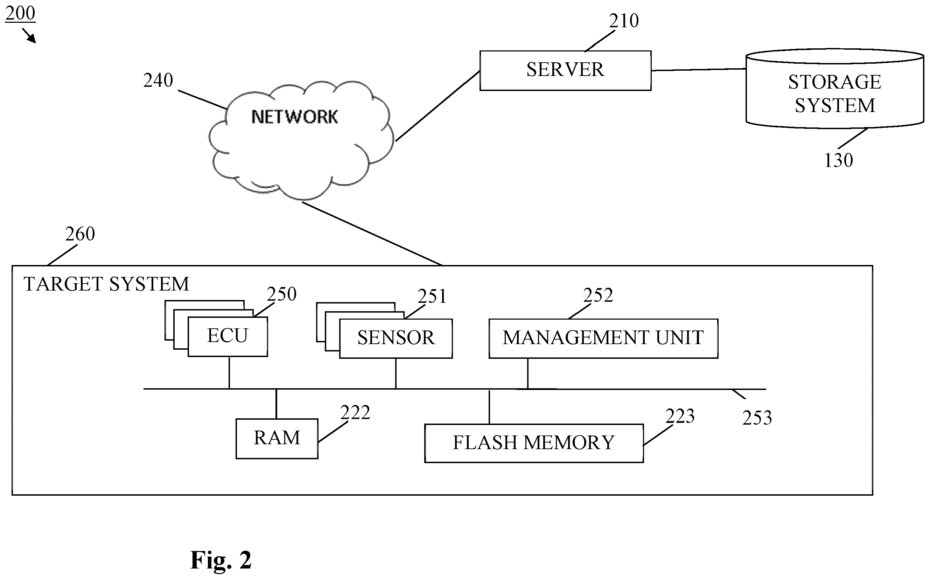

Reference is made to Fig. 2 that shows a system 200 according to illustrative embodiments of the present invention. As shown, system 200 may include a system 260 that may include a plurality of ECUs 250, a plurality of sensors 251 and a management unit 252 and an in-vehicle network or bus 253. As further shown, system 260 may include a RAM 222 and a flash memory 223. Although for the sake of clarity and simplicity, RAM 222 and a flash memory 223 are shown as separate units connected to in-vehicle network 253, it will be noted that RAM 222 and/or a flash memory 223 units may be included in some or each of ECUs 250, in some or all sensors 251 and in management unit 252. RAM 222 may be, or may include components as described with respect to memory 120. While flash memory is mainly described or referred to herein, it will be understood that any electronic, non-volatile computer storage medium adapted to store digital data and/or be electrically erased and reprogrammed may be used instead of, or in addition to, flash memory 223.

System 260 may be any device, system, vehicle or any other applicable entity. For example, system 260 may be, or it may be included or embedded in, an IoT device or a vehicle, e.g., an aircraft, car train or ship. Although vehicles such as cars are mainly described herein, other vehicles such as ships, trains and aircrafts are similarly applicable, it will be understood that the scope of the invention is not limited by the type, usage or nature of system 260.

ECUs 250 and sensors 251 may be collectively referred to hereinafter as ECUs 250 and/or sensors 251 or individually as ECU 250 and/or sensor 251, merely for simplicity purposes. For example, a sensor 251 may be an oil pressure sensor, a temperature sensor and the like, e.g., when an embodiment is, or is included in, a train or car or other vehicle. When an embodiment is included in an airplane, ship or spacecraft, an ECU 250 may be a line-replaceable unit (LRU), a lower line-replaceable unit (LLRU), a line-replaceable component (LRC), or a line-replaceable item (LRI) component. When an embodiment is included in an airplane, ship or spacecraft, a sensor 251 may be a unit that senses or measures, for example, elevation, acceleration, air speed or flow and the like.

In-vehicle network 253 may be any suitable network that enables ECUs 250, sensors 251 and management unit 253 to communicate or exchange digital information. In-vehicle network 253 may be, may include or may comprise any suitable network infrastructure and support any suitable protocol, e.g., Ethernet, CAN, IP, TCP and the like. Accordingly, numerous elements of in-vehicle network 253 are implied but not shown, e.g., routers, gateways etc. It will be recognized that embodiments of the invention are not limited by the nature of in-vehicle network 253.

Network 240 may be any suitable network that enables server 21 and target device 220 to communicate or exchange digital information. Network 240 may be, may comprise or may be part of a private or public IP network, or the internet, or a combination thereof. Additionally, or alternatively, network 240 may be, comprise or be part of a global system for mobile communications (GSM) network. For example, network 240 may include or comprise an IP network such as the internet, a GSM related network and any equipment for bridging or otherwise connecting such networks as known in the art. In addition, network 240 may be, may comprise or be part of an integrated services digital network (ISDN), a public switched telephone network (PSTN), a public or private data network, a local area network (LAN), a metropolitan area network (MAN), a wide area network (WAN), a wireline or wireless network, a local, regional, or global communication network, a satellite communication network, a cellular communication network, any combination of the preceding and/or any other suitable communication means. Accordingly, numerous elements of network 240 are implied but not shown, e.g., access points, base stations, communication satellites, GPS satellites, routers, telephone switches, etc. It will be recognized that embodiments of the invention are not limited by the nature of network 240. Server 201 may be a server as known in the art. As shown, server 210 may be operatively connected (e.g., directly or over a network) to a storage system 130.

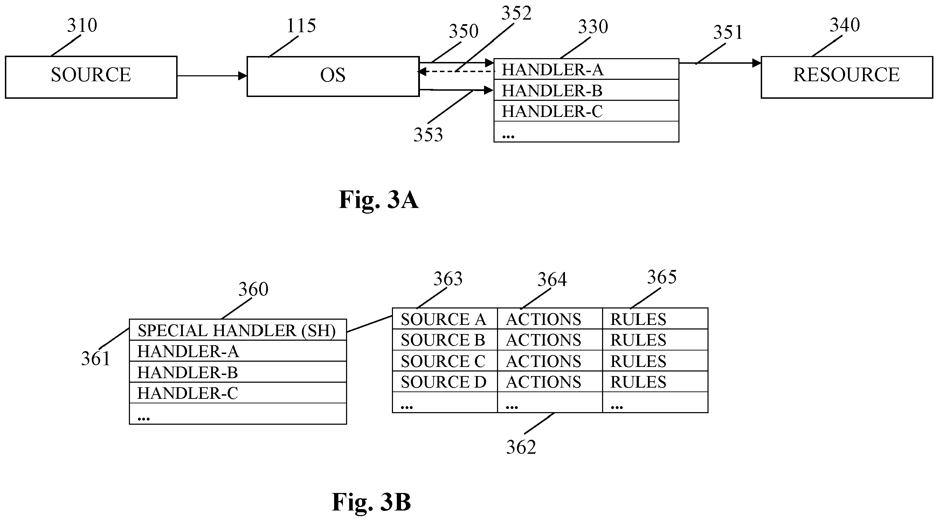

Reference is made to Fig. 3A which shows data constructs and a flow according to illustrative embodiments of the present invention. As shown by the arrow connecting source 310 with OS 115, a source 310 may request OS 115 to access resource 340. Source 310 (called source since it is the source of an access request or attempt) may be a user or an application that seeks to access resource 340, source 310 may be referred to herein as client, requestor or requester.

As shown by handlers list 330, a set of handlers (or managers) may be associated with resource 340. It will be noted that handlers or mangers in list 330 may be a pointer or reference. For example, the actual code of a handler may not be included in list 330, rather, a pointer or reference usable for calling or activating the handler may be stored in list 330, accordingly, for the sake of simplicity, entries in list 330 (and list 360 described herein) may be referred to as if they are the handlers themselves.

Generally, a handler or manager as referred to herein may be software that handles or manages access to a resource and/or actions related to the resource. The terms handler and manager as referred to herein may mean the same thing and may be used interchangeably herein. For example, if resource 340 is a file then a handler may be software that locates the file, opens the file, reads content from the file, writes content to the file and so on. In another example, if the resource is a memory, e.g., memory 120, then a handler may be software that is designed to read or write data from/to the memory.

OS 115 may be configured to attempt to access resource 340, for or on behalf or source 310, according to the order of handlers list 330. For example, as shown by arrow 350, upon receiving a request from source 310 to access resource 340, OS 115 may call, invoke, activate or use, the handler at the top of handlers list 330 (handler-A) and, as shown by arrow 351, handler-A may attempt to access resource 340. In some embodiments, a handler may fail to access a resource and/or the handler may report failure to OS 115. For example, if handler-A fails to access resource 340 then, as shown by dashed arrow 352, handler-A may report the failure to OS 115. In some embodiments, OS 115 may be configured such that, if a first handler reports an error or failure to access a resource, then a second handler may be invoked. For example, as shown by arrow 353, upon receiving a report of failure to access resource 340 from handler-A as described, OS 115 may call or invoke handler-B in handlers list 330. If handler-B reports failure, handler-C may be called by OS 115 and so on.

Reference is made to Fig. 3B which shows data constructs according to illustrative embodiments of the present invention. As shown by handlers list 360, handlers list 330 may be modified by including or inserting a special handler (SH) 361 into handlers list 330 to thus create a modified handlers list 360. For example, to create modified handlers list 360, SH 332 may be inserted or included in handlers list 330 such that it is the first one called or activated by OS 115 when a request to access resource 340 is received by OS 115 from source 310, e.g., assuming OS 115 calls the first or top handler in handlers list 330 and/or handlers list 360 in response to a request to access resource 340 then an embodiment may insert SH 332 at the top, or as the first handler, of/in list 331. As shown, SH 361 may include, or it may be associated with, a list or table 362 that specifies, for each source 363, a set of allowed (or forbidden) actions 364 and a set of rules 365. For example, actions 364 may be, or may describe, an access type, e.g., an action 364 can be "read", "write", "execute", "delete", "copy", "modify", "login" and so on.

For the sake of clarity and simplicity, only actions 364 and rules 365 are shown in list 362, however, it will be understood that any number of whitelists, blacklists, criteria, rules or constraints may be associated with each source 363. It will further be understood that a plurality of lists 362 may be associated with a respective plurality of resources 340, accordingly, SH 361 may apply one set of rules, constraints or criteria for a first resource 340 (e.g., a first file or folder) when accessed by a first source or client, a second set of set of rules, constraints or criteria for a second resource 340 (e.g., a second, different file or folder) when accessed by a second client or source, a third set of set of rules, constraints or criteria for a third resource 340 (e.g., a memory segment or network port) when a third source or client, different from the first and second sources, attempts to access the third resource, and so on.

For example, a first source 363 may be a privileged user or process (e.g., a process running in kernel mode), a second source may be a non-privileged user or process (e.g., a process running in user mode), a third source may be a specific application and so on. Resource 340 may be a folder, a file, a port, a memory, a controller, a service, a component and/or an operating system resource or service.

Accordingly, using list 362, SH 361 may allow a first application (e.g., source A in table 362) to read a file but prevent the application from writing data to the file, allow a second application (e.g., source B in table 362) to read the file and modify content in the file and prevent a third application (e.g., source C in table 362) from either reading or writing the file. As described, a set of tables or lists 362 may be associated with a set of resources, accordingly, SH 361 may control, e.g., in an ECU 250 as further described, access of any number of sources, clients or requestors with respect to any number of resources.

In some embodiments, when handlers list 360 is used as described, then, when a client 310 requests access to resource 340, OS 115 calls SH 361 and provides SH 361 with an identification of client or source 310, SH examines list 362 and decides (e.g., according to actions 364 and rules 365 as described), whether access to resource 340, by source 310, is to be permitted, enabled or allowed or whether the access request is to be refused, prevented or denied. SH 361 may further decide, based on list 362, whether or not the access request or attempt is to be logged or recorded. For example, either deciding to enable access to resource 340 or deciding to prevent such access, SH 361 may decide whether or not to log the access attempt, for example, operating in detection mode, SH 361 may allow all access attempts related to resource 340 but may selectively log some of the attempts, e.g., attempts that would be prevented when operating in prevention mode may be logged when operating in detection mode. Logged attempts may be reported, e.g., to server 210 that may store reports in storage 130, e.g., to be used for further analysis.

If selecting to allow access then SH 361 may refuse the request or SH 361 may otherwise cause OS 115 to determine that SH 361 has failed to access resource 340. In such case and as described with reference to Fig. 3A, OS 115 may call the next handler, e.g., handler A in list 361, and handler A may successfully complete the access. Accordingly, by refusing, preventing or failing an access attempt by SH 361 the access actually succeeds.

If, as described, SH 361 decides to prevent the access then SH 361 may perform one or more of the following: provide access to a dummy resource, log and/or report the attempt to access the resource, report to OS 115 that the resource was successfully accessed but avoid actually accessing the resource and so on.

Generally, if deciding to prevent access to the resource, e.g., because the requestor or client is not authorized to access the resource or to perform a requested action or access type then SH 361 may fool OS 115 to determine that the access request was successfully completed by SH 361 such that OS 115 does not call the next handler or manager in list 360.

In some embodiments, upon receiving a request or command to access resource 340, and further deciding to prevent access to resource 340 from, by, or on behalf of, source 310, SH 361 may respond, e.g., to OS 115, by indicating that no additional handlers 360 are to be used for, or commanded to, access resource 340 for or on behalf of, source 310. Based on knowledge (e.g., obtained from standards, conventions, specifications or other information describing or otherwise related to OS 115) SH 361 may be adapted to select any response to OS 115 that causes OS 115 to avoid further attempts to access resource 340 for or on behalf of source 310.

SH 361 may be adapted to select a response to OS 115 such that a specific response that is sent to source 310, e.g., by OS 115, is consequently selected and sent. For example, having decided to prevent source 310 from accessing resource 340, by selecting specific responses to OS 115, SH 361 can cause OS 115 to inform source 310 that resource 340 does not exist, or SH 316 may cause OS 115 to inform source 310 that resource 340 exists but is empty (e.g., an empty file that does not include any data), or SH 316 may cause OS 115 to inform source 310 that resource 340 is currently used by another user, or SH 316 may cause OS 115 to inform source 310 that resource 340 is encrypted and so on.

For example, if SH 316 determines that a request from source 310 to delete resource 340 is to be prevented, SH 361 may inform OS 115 that resource 340 was deleted even though SH 361 may avoid deleting resource 340. Loosely speaking, SH 361 may fool OS 115 into thinking that a command or request was fulfilled even though the command or request was not obeyed or served. As described, SH 361 may, by selecting a specific response to OS 115, actually select the response sent, from OS 115, to source 310.

Accordingly, SH 361 may practically control the behavior of OS 115 with respect to requests made by source 310, otherwise described, SH 361 may fully control responses or actions made by OS 115 when a request to access resource 340 is received.

As known in the art, different security threats (e.g., different types of attacks) need different actions or reactions taken by a security system. SH 361 may identify an attack, e.g., identify an attack type, an attack source, a specific hacker and so on. For example, data in list 362, e.g., in rules 365, may cause SH 361 to identify an attack based on the specific files (or the specific sequence of files) for which an access attempt was made, or identify an attack based based on the type of access requested (e.g., read, write, delete) and so on. SH 361 may select a response to OS 115 based on an identified attack such that a specific response (from OS 115) to source 310 is selected and sent, by OS 115. Accordingly, an embodiment may automatically and dynamically identify security threats and react differently to different security threats and/or different attack sources.

Resource 340 may be any resource in system 260, e.g., resource 340 may be a folder or file in flash memory 223 included in an ECU 250, or resource 340 may be a port, e.g., a network port, a memory segment, e.g., a segment of RAM memory 222 in an ECU 250, or resource 340 may be a sensor 251. Resource 340 may be a controller, a service, or any component and/or operating system resource or service in system 260.

Providing access to a dummy resource may include imitating the resource. For example, to imitate a file which source 310 attempted to access, SH 361 may return random data to thus full resource 310 into thinking or determining it actually succeeded to read the file, or SH 361 may, in response to an attempt to access a folder, imitate the folder by returning a made up, random or irrelevant list of files in the folder thus fooling source 310 into thinking it managed to access the folder. Similarly, responses imitating or informing successful opening, closing, reading and/or writing a network port may be generated by SH 361, responses wrongly or falsely informing client 310 that a service was provided, a component was configured and so on may all be generated by SH 361 if determining an access is to be blocked or prevented as described.

Selecting whether or not to allow access, e.g., by SH 361 as described, may be based on at least one of: the source, the resource, a requested action, operation or access type and/or a signature associated with the resource and/or a context. For example, selecting whether or not to allow access, e.g., by SH 361 based on the source, resource accessed and the requested action, operation or access type may be as described with reference to list or table 362, in addition, SH 361 may check whether or not the resource (e.g., a file) is encrypted and/or signed, otherwise described, SH 361 may verify that the resource has not been modified or tampered with by an unauthorized entity and SH 361 may prevent access to the resource if determining that the validity or authenticity of the resource cannot be verified.

Selecting whether or not to allow access, e.g., by SH 361, based on a context may be for example, based on a rule or criterion in list 362 which dictates that a resource may be accessed if the vehicle including system 260 is stationary but the resource cannot be accessed if the vehicle is in motion. Any state or condition of a vehicle or component therein may be regarded as a context. A context or state may be, for example, an operational stage or phase of a node connected to in-vehicle network 253, e.g., an ECU 250 is rebooting, an ECU 250 is in an initialization sage, the ECU 250 is restarting and so on. A context may be related to, or determined based on, a vehicle's state or operation, e.g., engine is running, vehicle is accelerating and so on. A context may be related to an in-vehicle network (e.g., an intrusion to the network was detected) and/or a context may be related to nodes attached to an in-vehicle network (e.g., a fault in, or malfunction of, an ECU 250, sensor 251 or other component attached to an in-vehicle network detected). A context may be detected or identified, e.g., by SH 361, based on at least one of: a state or other attribute of a vehicle, a state of an in-vehicle network, and a state of a node connected to the network. For example, by examining messages communicated over in-vehicle network 253, SH 361 may know, determine or identify, the state of a vehicle, the state of ECUs 250 and/or of sensors 251 and so on. Accordingly, determining whether or not to allow access to a resource may be based on a context.

In some embodiments, SH 361 may be, or may include, a proxy wrapper. For example, the code of handler A may be wrapped, or encapsulated in, a proxy wrapper such that when handler A is called or activated, by OS 115, instead of handler A, the proxy wrapper is called, in such case, the proxy wrapper may perform operations and/or logic as described with reference to SH 361.

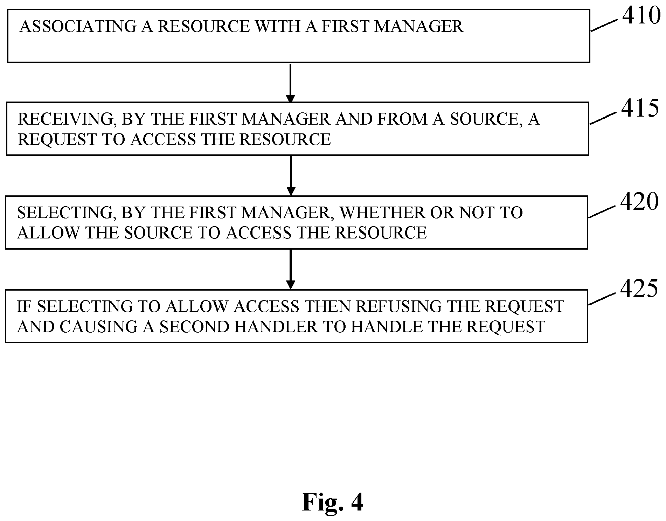

Reference is made to Fig. 4, a flow according to illustrative embodiments of the present invention. As shown by block 410, a resource may be associated with a manger. For example, SH 361 may be associated with resource 340 as described. As shown by block 415, a request to access a resource may be received, from a source, by the first manager. For example, OS 115 may send or convey a request from source 310 to SH 361 as described. As shown by block 420, the first manager may select whether or not to allow a source of a request to access a resource. For example, SH 361 may decide whether or not to allow source 310 to access resource 340. As shown by block 425, if selecting to allow access the request may be refused and a second handler may be caused to handle the request. For example, if SH 361 refuses or fails a request then handler A may be caused, by OS 115, to handle the request.

In the description and claims of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art. The scope of the invention is limited only by the claims.

Various embodiments have been presented. Each of these embodiments may of course include features from other embodiments presented, and embodiments not specifically described may include various features described herein.

## Claims

1. A method for controlling operation of a computing device (100), the method comprising:
associating a resource (340) with a special handler (361) included in a list (360) of handlers;
receiving, by the special handler (361) and from an operating system (115) controlling operation of the computing device (100), a request to access the resource (340) on behalf of a source (310);
selecting, by the special handler (361), whether or not to allow the source (310) to access the resource (340), and:
if selecting to allow access to the resource (340) then causing, by the special handler (361), the operating system (115) to determine that the special handler (361) has failed to access the resource (340) and to thus cause the operating system (115) to invoke a second handler in the list (360) of handlers and enabling, by the second handler, access to the resource; and
if selecting to prevent access to the resource (340) then performing at least one of:
providing access to a dummy resource,
preventing access to the resource (340) and informing the operating system (115) that the resource (340) was successfully accessed,
logging an attempt to access the resource (340), and
reporting an attempt to access the resource (340).

2. The method of claim 1, wherein the resource is one of: a folder, a file, a port, a memory, a controller, a service, a component and an operating system resource or service.

3. The method of claim 1, wherein providing access to a dummy resource includes imitating the resource.

4. The method of claim 1, wherein, selecting whether or not to allow access is based on at least one of: the source, the resource, a requested operation, a signature associated with the resource and a context.

5. The method of claim 4, wherein a requested operation is one of: read, write, execute, delete, copy, modify and login.

6. The method of claim 1, comprising, selecting, by the special handler, whether or not to log the request.

7. The method of claim 1, wherein, preventing access includes returning an error to the source.

8. The method of claim 1, wherein, the special handler includes a proxy wrapper of the resource.

9. A computer program (125) comprising instructions which, when executed by a controller (105), cause the controller (105) to implement any of the methods of claims 1-8.

10. A computer readable medium (120) comprising instructions which, when executed by a controller (105), cause the controller (105) to implement any of the methods of claims 1-8.

11. A system comprising:
a memory (120); and
a controller (105) configured to perform any of the methods of claims 1-8.

## Patentansprüche

1. Verfahren zum Steuern der Operation einer Rechenvorrichtung (100), wobei das Verfahren Folgendes umfasst:
Zuordnen eines Betriebsmittels (340) zu einem speziellen Handler (361), der in einer Liste (360) von Handlern enthalten ist;
Empfangen durch den speziellen Handler (361) und von einem Betriebssystem (115), das die Operation der Rechenvorrichtung (100) steuert, einer Anforderung für den Zugriff auf das Betriebsmittel (340) im Auftrag einer Quelle (310);
Auswählen durch den speziellen Handler (361), ob der Quelle (310) ein Zugriff auf das Betriebsmittel (340) erlaubt werden soll oder nicht; und
falls ausgewählt wird, einen Zugriff auf das Betriebsmittel (340) zu erlauben, Bewirken durch den speziellen Handler (361), dass das Betriebssystem (115) bestimmt, dass der spezielle Handler (361) fehlerhaft nicht auf das Betriebsmittel 340) zugreifen kann, und dadurch Bewirken, dass das Betriebssystem (115) einen zweiten Handler in der Liste (360) von Handlern aufruft und dadurch ermöglicht, dass der zweite Handler auf das Betriebsmittel zugreift; und
falls ausgewählt wird, einen Zugriff auf das Betriebsmittel (340) zu verhindern, Ausführen wenigstens eines der folgenden Schritte:
Bereitstellen eines Zugriffs auf ein Blind-Betriebsmittel,
Verhindern eines Zugriffs auf das Betriebsmittel (340) und Melden an das Betriebssystem (115), das auf das Betriebsmittel (340) erfolgreich zugegriffen worden ist,
Protokollieren eines Versuchs des Zugriffs auf das Betriebsmittel (340) und Berichten über einen Versuch des Zugriffs auf das Betriebsmittel (340).

2. Verfahren nach Anspruch 1, wobei das Betriebsmittel eines der Folgenden ist: ein Ordner, eine Datei, ein Port, ein Speicher, ein Controller, ein Dienst, eine Komponente und ein Betriebssystem-Betriebsmittel oder -Dienst.

3. Verfahren nach Anspruch 1, wobei das Bereitstellen eines Zugriffs für ein Blind-Betriebsmittel das Nachbilden des Betriebsmittels umfasst.

4. Verfahren nach Anspruch 1, wobei das Auswählen, ob ein Zugriff erlaubt werden soll oder nicht, auf wenigstens einem der Folgenden basiert: der Quelle, dem Betriebsmittel, einer angeforderten Operation, einer dem Betriebsmittel zugeordneten Signatur und einem Kontext.

5. Verfahren nach Anspruch 4, wobei eine angeforderte Operation eine der Folgenden ist: Lesen, Schreiben, Ausführen, Löschen, Kopieren, Modifizieren und Anmelden.

6. Verfahren nach Anspruch 1, das das Auswählen durch den speziellen Handler, ob die Anforderung protokolliert werden soll oder nicht, umfasst.

7. Verfahren nach Anspruch 1, wobei das Verhindern eines Zugriffs das Zurückleiten eines Fehlers zu der Quelle umfasst.

8. Verfahren nach Anspruch 1, wobei der spezielle Handler einen Proxy-Wrapper des Betriebsmittels enthält.

9. Computerprogramm (125), das Anweisungen enthält, die dann, wenn sie durch einen Controller (105) ausgeführt werden, den Controller (105) veranlassen, eines der Verfahren nach den Ansprüchen 1-8 zu implementieren.

10. Computerlesbares Medium (120), das Anweisungen enthält, die dann, wenn sie durch einen Controller (105) ausgeführt werden, den Controller (105) veranlassen, eines der Verfahren nach den Ansprüchen 1-8 auszuführen.

11. System, das Folgendes umfasst:
einen Speicher (120);
einen Controller (105), der konfiguriert ist, eines der Verfahren nach den Ansprüchen 1-8 auszuführen.

## Revendications

1. Procédé de commande du fonctionnement d'un dispositif informatique (100), le procédé comprenant :
l'association d'une ressource (340) à un gestionnaire spécial (361) figurant dans une liste (360) de gestionnaires ;
la réception, par le gestionnaire spécial (361) et en provenance d'un système d'exploitation (115) qui commande le fonctionnement du dispositif informatique (100), d'une demande d'accès à la ressource (340) pour le compte d'une source (310) ;
la sélection, par le gestionnaire spécial (361), s'il convient ou non de permettre l'accès à la ressource (340) par la source (310), et :
en cas de sélection qu'il convient de permettre l'accès à la ressource (340), alors la commande, par le gestionnaire spécial (361), au système d'exploitation (115) de déterminer que le gestionnaire spécial (361) n'est pas parvenu à accéder à la ressource (340) et donc de commander au système d'exploitation (115) d'invoquer un deuxième gestionnaire dans la liste (360) de gestionnaires, et l'habilitation, par le deuxième gestionnaire, de l'accès à la ressource ; et
en cas de sélection qu'il convient de bloquer l'accès à la ressource (340), alors la réalisation d'au moins une des actions suivantes :
la fourniture de l'accès à une ressource fictive,
le blocage de l'accès à la ressource (340) et la notification au système d'exploitation (115) du succès de l'accès à la ressource (340),
la journalisation d'une tentative d'accès à la ressource (340), et
la signalisation d'une tentative d'accès à la ressource (340).

2. Procédé selon la revendication 1, la ressource étant l'une des ressources suivantes : un dossier, un fichier, un port, une mémoire, un contrôleur, un service, un composant et une ressource ou un service du système d'exploitation.

3. Procédé selon la revendication 1, la fourniture de l'accès à une ressource fictive comportant l'imitation de la ressource.

4. Procédé selon la revendication 1, la sélection s'il convient ou non de permettre à l'accès étant basée sur au moins un des éléments suivants : la source, la ressource, une opération demandée, une signature associée à la ressource et un contexte.

5. Procédé selon la revendication 4, une opération demandée étant l'une des opérations suivantes : lecture, écriture, exécution, suppression, copie, modification et ouverture de session.

6. Procédé selon la revendication 1, comprenant la sélection, par le gestionnaire spécial, s'il convient ou non de journaliser la demande.

7. Procédé selon la revendication 1, le blocage de l'accès comportant le renvoi d'une erreur à la source.

8. Procédé selon la revendication 1, le gestionnaire spécial comportant un enveloppeur proxy de la ressource.

9. Programme d'ordinateur (125) comprenant des instructions qui, lorsqu'elles sont exécutées par un contrôleur (105), amènent le contrôleur (105) à mettre en oeuvre l'un quelconque des procédés selon les revendications 1 à 8.

10. Support lisible par ordinateur (120) comprenant des instructions qui, lorsqu'elles sont exécutées par un contrôleur (105), amènent le contrôleur (105) à mettre en oeuvre l'un quelconque des procédés selon les revendications 1 à 8.

11. Système, comprenant :
une mémoire (120) ; et
un contrôleur (105) configuré pour réaliser l'un quelconque des procédés selon les revendications 1 à 8.
